# EUROPEAN PATENT SPECIFICATION

(11) **EP 0 382 005 B1**
(45) Date of publication and mention of the grant of the patent: **14.04.1999**
(21) Application number: 90101440.7
(22) Date of filing: 25.01.1990
(51) Int. Cl.: C08J 7/04, C09D 139/06, G02B 1/10

(54) **Method to prepare pigmented laquers for the coloring of contact lenses.**
Verfahren zur Herstellung von für die Färbung von Kontaktlinsen geeigneten, pigmentierten Lacken.
Procédé de préparation d'une laque pigmentée pour la coloration de lentilles de contact.

(30) Priority: 30.01.1989 AR 313108
(43) Date of publication of application: 16.08.1990
(73) Proprietor: LABORATORIO PFÖRTNER CORNEALENT S.A.C.I.F., 1119 Buenos Aires (AR)
(72) Inventor: Pförtner, Tomas, Lopez, Bs. As. (AR)
(74) Representative: LOUIS, PÖHLAU, LOHRENTZ & SEGETH

(56) References cited:
- GB-A- 1 441 108
- US-A- 4 048 034
- US-A- 4 668 240

## Description

The present invention refers to a method for the manufacture of inks or pigmented lacquers for the coloring of contact lenses.

This invention is very especially related to the preparation of inks or lacquers for contact lenses formed by polymeric substrates, which make up the lens itself and a layer of color or colored varnish, which is in turn integrated to a partially prepolymerized matrix formulated with monomers, the polymerization of which is completed "in situ". In this manner, the color layer and the substratum remain firmly consolidated or bound through covalent linkage. The fundamental advantages of this invention are the color durability, the lacquer versatility (it may be applied to flexible, hydrophilic and gas permeable lenses) regardless of their constituent chemical groups) and the simplicity of the preparation and application methods.

### Background

It is a well known fact that colored contact lenses, also called "cosmetic" lenses, are mainly designed to enhance or modify the color of the eyes, by applying a layer of color that covers the iris.
The preliminary art includes several endeavors developed with the purpose of producing cosmetic contact lenses, including also ophthalmic prosthesis, of everlasting color. US Patent N^{º} 3.679.504 for instance, proposes the manufacture of soft contact lenses, of many-layers or "sandwich" structure, being the color layer formed or deposited between two transparent layers of hydrophilic polymers (for instance, copolymers of ethyleneglycol monomethacrylate with less than 2% of ethyleneglycol dimethacrylate, (eventually in mixture with the diester) bound by means of an adhesive layer consisting in a mixture of polymerized monomers (of a composition equal or similar to that of said layers) deposited or interposed between the mentioned hydrogel layers. In turn, the color layer is formed before the material or adhesive precursor mixture of monomers is deposited, starting from dyes or pigments applied, for instance, over one of the hydrogel formed layers. In this manner, the color layer is not in direct contact with the ocular fluids and tissues. Apart from the process being rudimentary, these lenses are far too thick.

U.S. Patent N^{º} 3.535.386 also proposed the manufacture of cosmetic contact lenses of multi-layer structure, in which covering of the color layer with a polymerizable liquid material is resorted to. As indicated in US Patent N^{º} 4.668.240, this type of multi-layer lenses are inconveniently thick and furthermore, due to the layers' defoliation or delamination, leave the color layer exposed.

According to the above mentioned US Patents, the materials that make up the contact lenses are hydrophilic polymers, with little reticulation and derived from the polymerization of vinylic monomers (especially acrylic and/or methacrylic esters). Different variations have been also proposed in this aspect, based on the application of other polymerized materials, such as polyurethane, mentioned in US Patents N^{º} 3.786.034, 3.821.136 and 4.359.558.

U.S. Patent N^{º} 4.668.240 (vide supra), describes and claims a method to produce durable colored contact lenses of great flexibility (as far as it refers to the possibilities of obtaining various colors) transparent or opaque, hydrophilic or flexible, and of thicknesses similar to those of the conventional contact lenses. The method covered by this U.S. Patent comprises partially covering a polymeric contact lens with colored material, including the color components carried in a polymeric medium, and then binding both polymeric matrixes, through covalent links produced between compatible and reactable groups, necessarily present in both polymers, and optionally also in the color components, with the condition that at least one of said reactive groups, is an oxirane or isocyanate group. Said reactable groups are -COOH,-0H and -NH₂ or -NH-alkyl groups. As examples of monomers including said groups, mention is made of various acrylic monomers, such as methacrylic acid and its hydroxymethyl or hydroxyethyl, aminoalkyl or glyceryl esters, and of monomers copolymerizable with the above mentioned, such as N-vinyl-2 pyrrolidone, vinyl ethers (e.g. vinyl ethyl ether) and alkyl esters of acrylic and methacrylic acid. As it follows from the above stated, the latter patent has its operative limitations and complications, derived from the essential interaction among the reactive groups, which demands complex formulations and costly checking during the industrial process.

The present invention provides, on the contrary, new reaction mechanisms, of greater versatility than those of all the previous ones and a simple and economical practical industrial application.

### Detailed description of the invention

Lets us now see how it is possible to prepare lacquers or varnishes for the coloring of contact lenses, by means of the method detailed in this invention, based on the processing of specifically formulated polymerizable materials, and according to a determined operative sequence, that results in the formation of pigmented lacquers, which during the curing stage are chemically bound to the prepolymerized material (precursor of the hydrophilic or polymethacrylic substratum that makes up the contact lens properly), thus structuring firmly adhered and wear resistant pigmented layers.

Therefore, the main object of the present invention is a method to manufacture pigmented lacquers or inks for cosmetic lenses, comprising the steps of :
a) to prepolymerize under UV radiation (375-420 nm) a mixture of:
   - 60 to 80 % by weight of N-vinyl-2-pyrrolidone (NVP)
   - 4 to 12% by weight of 2-hydroxyethyl methacrylate (HEMA)
   - 0.3 to 1% by weight of reticulant components
   - 8 to 15% by weight of glycidyl acrylate or methacrylate
   - up to 13% by weight of cyclohexyl methacrylate or acrylate
   - up to 1% by weight of acrylic or methacrylic acid
   - 0.1 to 0.5% by weight UV photoinitiator of polymerization, under stirring at ambient temperature (15-20°C), during a sufficient period of time to form an oily mass, which when rapidly cooled in an ice bath (-30 to -40°C) changes into a gel storable at -10 to -25°C ;
b) to extract the volatile monomers from said gel, at a temperature between 15 and 20°C, until an easily malleable paste is formed;
c) to let the paste formed in stage b) to settle at ambient temperature, during a period of time enough to have the remainder of monomers it might still contain, separated by exudation;
d) to dissolve the paste in a non-prepolymerized monomer mixture as defined under point a), to form a solution at a temperature not higher than 20°C, then proceed to filter and recover a transparent, colorless and curable lacquer; and optionally
e) to pigment the lacquer of stage d), mixing it with the necessary quantity of the chosen micronized pigment.

With the above described method, pigmented or colorless lacquers or varnishes, storable during periods of up to 6 months (at low temperatures, for instance -10° to -25° C) with no unfavorable changes and consequently, ready to be used, are obtained.

As already pointed out, the lacquers are curable by catalysis, for which reason incorporation of appropriate polymerization catalysts is required prior to their application. For instance, Lupersol 256 (trade mark of a Pennwalt Corp. product) or USP 245 (a registered product of Witco Corp.) in a proportion of 0.2 to 1% with respect to the mass of pigmented lacquer.

The pigmented or colorless inks or lacquers obtained with the method herein described, may be applied over any prepolymerized surface, cellulosic substratum, etc. This means that the formulation of the substratum to be covered with the ink of the present innovation has no critical importance. It is considered that in this particular aspect of the lacquers as here described, a very important part is played by the reactivity of the glycidyl component whose oxirane (or epoxy) groups react with hydroxyl or amino groups of the polymeric substratum, remaining the colored or colorless layer fixed by means of covalent links of well known chemical stability.

Various crosslinking components may be used; the preferred ones are diallyl maleate, ethyleneglycol di(meth)acrylate, trimethylol propane dimethacrylate and tri or tetraethylene glycol dimethacrylate and mixtures thereof.

As possible polymerization catalysts, benzoin, diisopropylxanthogendisulfide (Diproxid R of INC Pharmaceutical), and Darocur R (Merck), may be mentioned among others.

The operations from a) to e) may be immediately carried out successively or by steps. It is possible, for instance, to prepare a relatively large mass of the material to be prepolymerized (monomer mixture: HEMA and N-vinyl-2- pyrrolidone, crosslinker and the glycidyl component), which is stable when stored at 18° to 20° C, to be used later on (in only one batch or in several fractions), the catalytic component being subsequently incorporated and proceeding then to the mass irradiation (under magnetic or mechanic stirring) with UV (an appropriate UV source are the actinic tubes Phillips ILA 20W 05).

This prepolymerization operation is carried out at ambient temperature (between 15 and 20° C) and it continues until the mass gets a consistency or viscosity that indicates an appropriate polymerization degree. A lapse of time of 60 to 90 minutes is generally sufficient to reach such polymerization degree, shown by an evident thickening of the mass, that acquires consistency and oily dripping. At this point the polymerization progress is stopped by turning off the UV and cooling the container in a bath of -30° to -40° C (refrigerated acetone or alcohol bath), while stirring is continued. The resulting mass has a gel consistency, storable at low temperatures (-10° to -25° C), or ready to be immediately processed.

Stage b) above corresponds to the formation of a paste with the prepolymer formulated in stage a). If the gel has been kept at -10° to -25° C, it is left to acquire ambient temperature and then treated by any means known in the art, for a time necessary to extract the free monomers it might contain. The chosen treatment is maintained until all the gel has been transformed into an easily malleable paste, also storable at low temperatures.

As already stated, stage c) consists in leaving the paste to settle at ambient temperature in order that the remainder of free monomers that it might have retained, may be lost by exudation.

Stage d) consists in the preparation of the transparent varnish or lacquer and it implies dissolving the paste obtained in stage c) in a predetermined proportion (according to the desired fluidity), in the mixture of monomer reticulants and binder (without prepolymerization) as defined in stage a). The transparent varnish is generally prepared with 60 parts by weight of the settled paste, and 40 parts by weight of said monomer mixture. This operation is carried out at a temperature not exceeding ambient temperature, for instance with a cutting blades mixer, checking the temperature and cooling if necessary. It is desirable to leave the solution to settle one or two days so that it may age and clarify, proceeding then to screen or sieve filtering. This product, storable at low temperatures (-15° to -20° C) is a transparent lacquer or varnish ready to be immediately used or left to age as indicated above.

The final stage e) refers to the preparation of a pigmented ink or lacquer, by mixing the transparent varnish with a pigment or mixture of micronized pigments.

The quantity of pigment obviously depends on the covering power of the chosen pigment and the intensity of the color desired. The mixture is then processed very conveniently in a ball mill or tumbling device. Lacquers storable at -15°/20° C during periods of up to six months, with no noticeable changes, are obtained.

It is thus possible to obtain "type" or "mother" pigmented lacquers of each color, of which, according to requirements, fractions of constant composition and characteristics may be taken, ensuring in this manner the obtention of colors with constant shade and intensity.

Although the pigmented or colorless lacquers or varnishes obtained with the method herein described, may be used in all the conventional color application or coating techniques: brush, offset printing, aspersion, etc., the preferred method is the offset tampographic printing (offset pad printing) as mentioned in Argentine Patent Applications 301.045, 308.046 and 311.845. This also implies that the printing may be made over the surface of the finished lens or at any prior stage in its production, in conventional "sandwich" or on any stratum of the lens body, or on intermediary dies.

Prior to applying the pigmented varnish on the transparent contact lens, it is activated by adding an appropriate polymerization catalyst (for thermal polymerization) such as USP 245 or Lupersol 256 (vide supra). It is desirable to deionize the transparent lenses (to eliminate the static electricity) prior to coloring. Once the coloring process is completed, the compound is baked at 100° to 110° C during 10 to 12 hours, and in the case of hydrophilic lenses, they are hydrated according to the conventional practice or as most convenient to the constituent material.
As a reference, examples of the preparation of polymerizable formulations for stage a) of the method under the present invention are included:

### Example 1

| | parts by weight |
|---|---|
| - N-vinyl-2-pyrrolidone | 73.9 |
| - 2-Hydroxyethyl methacrylate | 12 |
| - Monomethyl methacrylate | 13 |
| - Methacrylic Acid | 0.50 |
| - Allyl methacrylate | 0.30 |
| - Diallyl maleate | 0.30 |

9 parts by weight of glycidyl acrylate and 0.11 parts by weight of Diproxid as a catalyst are added to the total mixture.

### Example 2

| | parts by weight |
|---|---|
| - Monomethyl methacrylate | 98.90 |
| - Methacrylic acid | 0.50 |
| - Allyl methacrylate | 0.30 |
| - Diallyl maleate | 0.30 |

14 parts by weight of glycidyl acrylate and 0.20 parts by weight of Diproxid are added to this mixture.

The lacquer formulations to obtain the most common colors are as follows:

### Example 3

| **Blue color** | parts by weight |
|---|---|
| Lacquer | 60.66 |
| White | 14.70 |
| Blue | 8.08 |
| Red | 1.97 (in drops) |
| Monomer | 16.50 |

### Example 4

| **Violet color** | parts by weight |
|---|---|
| Lacquer | 51.43 |
| Violet | 2.86 |
| White | 28.56 |
| Black | 8.57 |
| Monomer | 8.57 |

### Example 5

| **Green color** | parts by weight |
|---|---|
| Lacquer | 73.61 |
| Green | 2.71 |
| Yellow | 1.24 |
| Black | 2.51 |
| White | 9.70 |
| Monomer | 10.23 |

### Example 6

| **Hazel color** | parts by weight |
|---|---|
| Lacquer | 49.88 |
| Brown | 4.16 |
| Yellow | 11.40 |
| White | 14.61 |
| Monomer | 19.95 |

The pigments used in the preparation of the colored lacquers are well known and their names are the following:

| **Green Hostaperm 86** | |
|---|---|
| Cu phthalocyanine | Cl 74265 |
| | Green Pigment |

| **Blue Hostaperm A2R** | |
|---|---|
| Stable modification of the Cu phthalocyanine | Cl 74160 |
| | Blue pigment 15:1 |

| **Violet Hostaperm Speclal** | |
|---|---|
| Dioxazine pigment | CI 51319 |
| | Violet pigment 13 |

| **Yellow Hostaperm HAG** | |
|---|---|
| Monoazoic pigment of the benzimidazolone range | Cl 13980 |

| **Brown Hostaperm HFL (Hazelperm-Braun HFL)** | |
|---|---|
| Benzimidazolone pigment | CI 13980 |
| | Brown Pigment 32 |
| Solid white (TiO₂ PV-R-01 Hoechst) | |

As it may be noticed, the outstanding advantages of the present invention are:
- durability of the lens and color layer binding;
- simplicity in the formulation and storage of the colored or colorless lacquer and its intermediary preparations;
- versatility of the colored or colorless lacquer, that may be applied regardless of the constituent chemical groups of the substratum to be colored or covered;
- remarkable reduction of production costs.

## Claims

1. A method for the preparation of lacquers or varnishes for coloring contact lenses, comprising the steps of:
(a) prepolymerizing under UV radiation of 375 to 420 nm wavelength a mixture of:
- 60 to 80 % by weight of N-vinyl-2-pyrrolidone;
- 4 to 12 % by weight of hydroxyethyl methacrylate;
- 0,3 to 1 % by weight of crosslinking components;
- up to 13 % by weight of cyclohexyl methacrylate or acrylate;
- 8 to 15 % by weight of glycidyl acrylate or methacrylate;
- up to 1 % by weight acrylic or methacrylic acid;
- 0,1 to 0,5 % by weight of a UV-photoinitiator of polymerization, preferably diisopropylxanthogendisulfide,
under stirring and at 15 to 20 °C, during a period of time sufficient to form an oily mass, which when radiation is turned off and is rapidly cooled in a -30° to -40° C bath, changes into a gel storable at low temperature (-10° to -25° C);
(b) extracting the free monomers from said gel at a temperature between 15 and 20 °C until an easily malleable paste is formed;
(c) letting the paste settle at ambient temperature, so that it may lose by exudation the remainder of free monomers it might contain;
(d) dissolving this paste in a non-prepolymerized mixture of liquid monomers as defined in point (a) at a temperature not higher than 20 °C, then filtering and recovering a transparent, colorless and curable lacquer, and optionally
(e) pigmenting the lacquer of point (d) by mixing it with micronized pigments.

2. The method according to claim 1, wherein the components N-vinyl-2-pyrrolidone and 2-hydroxyethyl methacrylate of point (a) in claim 1 are replaced with methyl methacrylate.

3. The method according to claim 1 or 2, wherein prepolymerization of the monomer mixture is carried out by heat, replacing the UV photoinitiators by benzoyl peroxide or azobisisobutyronitrile in similar proportions.

4. The method according to any of claims 1, 2 and 3, wherein the crosslinking component is chosen among diallyl maleate, ethyleneglycol diacrylate or dimethacrylate, trimethylol propane dimethacrylate and tri or tetraethylene glycol dimethacrylate and mixtures thereof.

5. The method according to any of claims 1, 2, 3 and 4 wherein ethyleneglycol dimethacrylate and diallyl methacrylate, each one in a concentration of 0,15 to 0,50 % by weight, are simultaneously applied as crosslinking agents.

6. The method according to any of claims 1, 2, 4 and 5 wherein the UV photoinitiator is chosen among benzoine and 2-hydroxy-2-methyl-1-phenyl-propan-1-one.

7. The method according to claim 1, wherein the monomer mixture comprises:
60-80 % by weight of N-vinyl-2-pyrrolidone, 4 to 10 % by weight of 2-hydroxyethyl methacrylate, 0,30 % by weight of ethyleneglycol dimethacrylate, 0,30 % by weight of diallyl maleate and 12 % by weight of glycidyl acrylate.

8. The method of any of claims 1 to 7, comprising the further step of applying the lacquers or varnishes as a layer over any compatible surface that warrants the solidarity of the binding between layer and substratum, e.g. to a surface of a finished transparent contact lens or to the surface of any intermediate in the production of the lens.

## Patentansprüche

1. Verfahren zur Herstellung von Lacken oder Lackfarben zum Färben von Kontaktlinsen, das die Stufen umfaßt:
(a) Prepolymerisieren, unter UV-Bestrahlung mit einer Wellenlänge von 375 bis 420 nm, einer Mischung aus
- 60 bis 80 Gew.-% N-Vinyl-2-pyrrolidon;
- 4 bis 12 Gew.-% Hydroxyethylmethacrylat;
- 0,3 bis 1 Gew.-% Vernetzungskomponenten;
- bis zu 13 Gew.-% Cyclohexylmethacrylat oder -acrylat;
- 8 bis 15 Gew.-% Glycidylacrylat oder -methacrylat;
- bis zu 1 Gew.-% Acryl- oder Methacrylsäure;
- 0,1 bis 0,5 Gew.-% eines UV-Photoinitiators zur Polymerisation, vorzugsweise
Diisopropylxanthogendisulfid,
unter Rühren und bei 15 bis 20 °C während eines
Zeitraums, der ausreicht, um eine ölige Masse auszubilden, die, wenn die Bestrahlung beendet wird und sie rasch in einem Bad von -30 bis -40 °C abgekühlt wird, in ein Gel übergeht, das bei niedriger Temperatur (-10 ° bis -25 °C) lagerbeständig ist;
(b) Extrahieren der freien Monomeren aus dem Gel bei einer Temperatur zwischen 15 und 20 °C, bis eine leicht verformbare Paste ausgebildet ist;
(c) Stehenlassen der Paste bei Umgebungstemperatur, damit sie durch Exsudation den Rest der freien Monomeren, den sie enthalten könnte, verliert;
(d) Auflösen der Paste in einer nicht-prepolymerisierten Mischung von in Stufe (a) definierten flüssigen Monomeren bei einer Temperatur von nicht mehr als 20 °C, und nachfolgendes Filtrieren und Gewinnen eines transparenten, farblosen und härtbaren Lackes, und gegebenenfalls
(e) Pigmentieren des Lackes aus Stufe (d) durch Mischen mit mikronisierten Pigmenten.

2. Verfahren nach Anspruch 1, dadurch gekennzeichnet, daß die Komponenten N-Vinyl-2-pyrrolidon und 2-Hydroxyethylmethacrylat der Stufe (a) des Anspruchs 1 durch Methylmethacrylat ersetzt werden.

3. Verfahren nach Anspruch 1 oder 2, dadurch gekennzeichnet, daß die Prepolymerisation der Monomerenmischung durch Hitze durchgeführt wird, indem man die UV-Photoinitiatoren durch ähnliche Anteile an Benzoylperoxid oder Azobisisobutyronitril ersetzt.

4. Verfahren nach einem der Ansprüche 1, 2 und 3, dadurch gekennzeichnet, daß die Vernetzungskomponente ausgewählt ist unter Diallylmaleat, Ethylenglykoldiacrylat oder -dimethacrylat, Trimethylolpropandimethacrylat und Tri- oder Tetraethylenglykoldimethacrylat, und Mischungen davon.

5. Verfahren nach einem der Ansprüche 1, 2, 3 und 4, dadurch gekennzeichnet, daß Ethylenglykoldimethacrylat und Diallylmethacrylat, jeweils in einer Konzentration von 0,15 bis 0,50 Gew.-%, gleichzeitig als Vernetzungsmittel verwendet werden.

6. Verfahren nach einem der Ansprüche 1, 2, 4 und 5, dadurch gekennzeichnet, daß der UV-Photoinitiator ausgewählt ist unter Benzoin und 2-Hydroxy-2-methyl-1-phenyl-propan-1-on.

7. Verfahren nach Anspruch 1, dadurch gekennzeichnet, daß die Monomerenmischung umfaßt:
60 bis 80 Gew.-% N-Vinyl-2-pyrrolidon, 4 bis 10 Gew.-% 2-Hydroxyethylmethacrylat, 0,30 Gew.-%
Ethylenglykoldimethacrylat, 0,30 Gew.-% Diallylmaleat und 12 Gew.-% Glycidylacrylat.

8. Verfahren nach einem der Ansprüche 1 bis 7, dadurch gekennzeichnet, daß es die zusätzliche Stufe aufweist: Applizieren der Lacke oder Farblacke als Schicht auf eine kompatible Oberfläche, die die Festigkeit der Bindung zwischen der Schicht und dem Substrat gewährleistet, z.B. auf eine Oberfläche einer fertigen transparenten Kontaktlinse oder auf die Oberfläche eines Zwischenproduktes bei der Herstellung der Linse.

## Revendications

1. Une méthode pour la préparation de laques ou vernis destinés à la coloration de lentilles de contact, comprenant les étapes consistant à:
(a) prépolymériser sous un rayonnement UV d'une longueur d'onde de 375 à 420 mm un mélange de :
- 60 à 80% en poids de N-vinyl-2-pyrrolidone ;
- 4 à 12% en poids de méthacrylate d'hydroxyéthyle ;
- 0,3 à 1% en poids de composants réticulants ;
- jusqu'à 13% en poids de méthacrylate ou d'acrylate de cyclohexyle ;
- 8 à 15% en poids d'acrylate ou de méthacrylate de glycidyle ;
- jusqu'à 1% en poids d'acide acrylique ou méthacrylique ;
- 0,1 à 0,5% en poids d'un photo-initiateur de polymérisation aux UV, de préférence le disulfure de di-isopropylxanthogène ;
en agitant et à 15-20°C, pendant une période de temps suffisante pour former une masse huileuse qui, quand le rayonnement est interrompu et qu'elle est rapidement refroidie dans un bain de -30° à -40°C, se transforme en un gel qui peut être conservé à basse température (10° à -25°C) ;
(b) extraire les monomères libres de ce gel à une température comprise entre 15 et 20°C jusqu'à formation d'une pâte aisément maléable ;
(c) laisser la pâte reposer à température ambiante, de manière telle qu'elle puisse perdre par exsudation le reste de monomères libres qu'elle pourrait contenir ;
(d) dissoudre la pâte dans un mélange non-prépolymérisé de monomères liquides tel que défini au point (a), à une température non supérieure à 20°C, puis filtrer et recueillir une laque transparente, incolore et durcissable par cuisson et, facultativement
(e) pigmenter la laque du point (d) en la mélangeant avec des pigments micronisés.

2. La méthode selon la revendication 1, dans laquelle les composants N-vinyl-2-pyrrolidone et méthacrylate de 2-hydroxyéthyle du point (a) de la revendication 1 sont remplacés par du méthacrylate de méthyle.

3. La méthode selon la revendication 1 ou 2, dans laquelle la prépolymérisation du mélange monomère est réalisée par la chaleur, en remplaçant les photo-initiateurs d'UV par le peroxyde de benzoyle ou l'azo-bis-isobutyronitrile en proportions semblables.

4. La méthode selon l'une quelconque des revendications 1, 2 et 3, dans laquelle le composant réticulant est choisi entre le maléate de diallyle, le diacrylate ou le diméthacrylate d'éthylèneglycol, le diméthacrylate de triméthylolpropane ou le diméthacrylate de tétraéthylèneglycol et leurs mélanges.

5. La méthode selon l'une quelconque des revendications 1, 2, 3 et 4, dans laquelle le et le méthacrylate de diallyle, chacun à une concentration de 0,15 à 0,50% en poids, sont simultanément utilisés comme agents réticulants.

6. La méthode selon l'une quelconque des revendications 1, 2, 4 et 5, dans laquelle le photo-initiateur UV est choisi entre la benzoïne et la 2-hydroxy-2-méthyl-1-phényl-propan-1-one.

7. La méthode selon la revendication 1, dans laquelle le mélange monomère comprend 60-80% en poids de N-vinyl-2-pyrrolidone, 4 à 10% en poids de méthacrylate de 2-hydroxyéthyle, 0,30% en poids de diméthacrylate d'éthylèneglycol, 0,30% en poids de maléate de diallyle et 12% en poids d'acrylate de glycidyle.

8. La méthode selon l'une quelconque des revendications 1 à 7, comprenant l'étape supplémentaire consistant à appliquer les laques ou vernis sous forme d'une couche sur n'importe quelle surface compatible garantissant la solidarité de la liaison entre la couche et le substrat, par exemple à la surface d'une lentille de contact transparente terminée, ou à la surface de n'importe quel produit intermédiaire dans la production de la lentille.
